# EUROPÄISCHE PATENTSCHRIFT

(11) **EP 3 924 644 B1**
(45) Veröffentlichungstag und Bekanntmachung des Hinweises auf die Patenterteilung: **05.07.2023**
(21) Anmeldenummer: 20707360.2
(22) Anmeldetag: 12.02.2020
(51) Int. Cl.: F16H 3/10, F16H 3/00, F16H 3/089, B60K 1/00, B60K 17/26, F16H 3/08

(54) **LASTSCHALTBARES MEHR-GANG-GETRIEBE MIT FREILAUF**
POWER SHIFTABLE MULTI-GEAR TRANSMISSION HAVING FREEWHEEL
TRANSMISSION À PLUSIEURS RAPPORTS POURVUE D'UNE ROUE LIBRE

(30) Priorität: 14.02.2019 DE 102019202015
(43) Veröffentlichungstag der Anmeldung: 22.12.2021
(73) Patentinhaber: Robert Bosch GmbH, 70442 Stuttgart (DE)
(72) Erfinder: KRAEUTER, Janek, 71636 Ludwigsburg (DE)
(86) Internationale Anmeldenummer: PCT/EP2020/053528
(87) Internationale Veröffentlichungsnummer: WO 2020/165203

(56) Entgegenhaltungen:
- CN-A- 102 392 885
- CN-A- 105 041 988
- CN-U- 201 992 007

## Beschreibung

### Technisches Gebiet

Die Erfindung bezieht sich auf ein lastschaltbares Mehr-Gang-Getriebe mit Freilauf. Des Weiteren bezieht sich die Erfindung auf die Verwendung des lastschaltbaren Mehr-Gang-Getriebes für Elektrofahrzeuge und Hybridfahrzeuge im PKW-, Nutzfahrzeug- und LKW-Bereich.

### Stand der Technik

DE 10 2016 212 867 A1 bezieht sich auf ein Getriebe für einen Elektroantrieb, insbesondere für ein Kraftfahrzeug. Das Getriebe umfasst eine elektrische Maschine, eine Triebwelle und mindestens eine erste und eine zweite Gangstufe. Die erste Gangstufe ist über eine erste Kupplung, die zweite Gangstufe über eine zweite Kupplung schaltbar. Die erste Kupplung ist im Normalzustand mittels einer mechanischen Feder geschlossen und durch einen insbesondere hydraulischen Druckaufbau mittels einer Pumpe zu öffnen. Die zweite Kupplung ist im Normalzustand offen und kann durch einen insbesondere hydraulischen Druckaufbau mittels einer Pumpe geschlossen werden. Bei dem Getriebe ist im Normalzustand der ersten und zweiten Kupplung der erste Gang eingelegt, wobei die erste Kupplung geschlossen und die zweite Kupplung offen steht. Zum Umschalten des Getriebes in den zweiten Gang wird die erste Kupplung geöffnet und die zweite Kupplung geschlossen.

DE 10 2015 121 157 A1 bezieht sich auf einen Hybridantriebsstrang für ein Kraftfahrzeug. Der Antriebsstrang umfasst eine erste Antriebseinheit und eine zweite Antriebseinheit. Zum Wechsel der beiden Antriebseinheiten umfasst der Antriebsstrang zwei Kupplungen. In einer bevorzugten Ausführungsform ist ein Radsatz einer ersten Getriebeanordnung zur Einrichtung einer ersten Vorwärtsgangstufe ausgebildet, wobei ein Losrad dieses Radsatzes mittels eines Freilaufs mit der diesem Losrad zugeordnete Welle verbunden werden kann.

Aus der CN 201 992 007 U ist ein lastschaltbares Mehr-Gang-Getriebe mit den Merkmalen des Oberbegriffs des Anspruchs 1 bekannt.

Aus der CN 105 041 988 A ist ein weiteres lastschaltbares Merh-Gang-Getriebe bekannt, bei dem der ersten Gangstufe eine erste Kupplung und der zweiten Gangstufe eine von der ersten Kupplung getrennt angebrachte zweite Kupplung zugeordnet ist.

### Darstellung der Erfindung

Erfindungsgemäß wird ein lastschaltbares Mehr-Gang-Getriebe mit einer angetriebenen Eingangswelle und einer Welle mit einer ersten Gangstufe und mit einer zweiten Gangstufe, wobei die erste Gangstufe mit einer ersten Übersetzung mit einem als erstes Kraftübertragungselement vorgesehenen ersten Ritzel mit Stirnradverzahnung, das mittels eines Freilaufs auf der Eingangswelle angeordnet ist, und einem ersten Zahnrad mit Stirnradverzahnung versehen ist, wobei die zweite Gangstufe mit einer zweiten Übersetzung ein zweites Ritzel mit Stirnradverzahnung und ein zweites Zahnrad mit Stirnradverzahnung aufweist, wobei der ersten Gangstufe eine erste Kupplung und der zweiten Gangstufe eine von der ersten Kupplung getrennt angebrachte zweite Kupplung zugeordnet ist, wobei das zweite Ritzel in Hülsenform ausgeführt, auf der Eingangswelle gelagert und Teil der zweiten Kupplung ist und wobei das erste Zahnrad auf der Welle gelagert ist. Erfindungsgemäß ist das erste Zahnrad in Hülsenform ausgeführt und auf der Welle drehbar gelagert und Teil der ersten Kupplung. Durch die erfindungsgemäß vorgeschlagene Lösung ist bei Schaltvorgängen unter Last die Schaltqualität einerseits erheblich verbessert, andererseits ist aufgrund des Freilaufs eine größere Laufruhe des erfindungsgemäß vorgeschlagenen Mehr-Gang-Getriebes erreichbar; das NVH-Verhalten ist erheblich besser (NVH = Noise Vibration Harshness).

Bei dem erfindungsgemäß vorgeschlagenen lastschaltbaren Mehr-Gang-Getriebe kommt im Rahmen der ersten Gangstufe eine erste Kupplung und im Rahmen der zweiten Gangstufe eine zweite Kupplung zum Einsatz. Ist die erste Kupplung geschlossen, so wird am lastschaltbaren Mehr-Gang-Getriebe ein erster Gang mit einer ersten Übersetzung i₁ realisiert. Steht die erste Kupplung offen und ist die zweite Kupplung geschlossen, so ist das erfindungsgemäß vorgeschlagene lastschaltbare Mehr-Gang-Getriebe im Rahmen der zweiten Gangstufe in einen zweiten Gang geschaltet. Im zweiten Gang liegt die zweite Übersetzung i₂, d. h. ein anderes Übersetzungsverhältnis verglichen zur ersten Gangstufe, vor.

Aufgrund der wechselweise drehfesten beziehungsweise drehbaren Lagerungen der Komponenten der ersten Gangstufe und der zweiten Gangstufe kann das erfindungsgemäß vorgeschlagene lastschaltbare Mehr-Gang-Getriebe über die beiden Kupplungen jeweils in den ersten Gang beziehungsweise in den zweiten Gang geschaltet werden, ohne dass weitere Schaltungskomponenten erforderlich sind.

In Weiterbildung der erfindungsgemäß vorgeschlagenen Lösung ist das lastschaltbare Mehr-Gang-Getriebe an der angetriebenen Eingangswelle über mindestens eine elektrische Maschine angetrieben.

In Weiterbildung der erfindungsgemäß vorgeschlagenen Lösung weist das lastschaltbare Mehr-Gang-Getriebe darüber hinaus eine durch ein Differentialgetriebe gebildete Endgangstufe auf. Die Endgangstufe bildet in Kombination mit der ersten Übersetzung i₁ oder der zweiten Übersetzung i₂ den ersten Gang oder den zweiten Gang des lastschaltbaren Mehr-Gang-Getriebes.

Beim erfindungsgemäß vorgeschlagenen lastschaltbaren Mehr-Gang-Getriebe ist auch die Endgangstufe mit einer Stirnradverzahnung versehen und umfasst ein drehfest auf der Welle angeordnetes drittes Ritzel und ein drittes Zahnrad, die miteinander kämmen. Das dritte Zahnrad dient als Antrieb für das Differential, über das die Momente und Drehzahlen an die Räder verteilt werden. Diese Lösung ist äußerst platz- und gewichtsparend.

Beim erfindungsgemäß vorgeschlagenen lastschaltbaren Mehr-Gang-Getriebe ist das zweite Zahnrad der zweiten Gangstufe auf der Welle drehfest angeordnet.

Die Erfindung bezieht sich darüber hinaus auf ein E-Achsen-Modul, welches als Vorderachs-E-Achsen-Modul oder als Hinterachs-E-Achsen-Modul ausgebildet sein kann und bei einem elektrisch oder hybrid angetriebenen Fahrzeug zum Einsatz kommt.

An dem E-Achsen-Modul, sei es für die Vorderachse, sei es für die Hinterachse eines elektrisch oder hybrid angetriebenen Fahrzeugs gedacht, kommt das erfindungsgemäß vorgeschlagene lastschaltbare Mehr-Gang-Getriebe zum Einsatz, welches an seiner angetriebenen Eingangswelle bevorzugt durch mindestens eine elektrische Maschine angetrieben ist.

Die Erfindung bezieht sich darüber hinaus auf die Verwendung des lastschaltbaren Mehr-Gang-Getriebes in einem E-Achsen-Modul eines elektrisch oder hybrid angetriebenen Fahrzeugs.

### Vorteile der Erfindung

Das erfindungsgemäß vorgeschlagene lastschaltbare Mehr-Gang-Getriebe realisiert ein Schaltkonzept mit mindestens zwei Stirnradpaaren, sodass zumindest eine erste Übersetzung i₁ und eine zweite Übersetzung i₂ realisiert werden können. Im Vergleich zu Schaltkonzepten aus dem Stand der Technik, bei denen beispielsweise Planetenradgetriebe geschaltet werden, kann durch das erfindungsgemäß vorgeschlagene lastschaltbare Getriebe der Fahrkomfort bei geforderter Lastschaltbarkeit des lastschaltbaren Mehr-Gang-Getriebes erheblich verbessert werden. Darüber hinaus kann durch die gleichzeitige Betätigung beider Kupplungen, seien sie elektrisch, elektromagnetisch, mechanisch, elektrohydraulisch oder hydraulisch betätigt, eine Parksperrenfunktion am lastschaltbaren Mehr-Gang-Getriebe realisiert werden, was bisher kostenintensive Lösungen erforderte.

Durch den Wegfall der herkömmlichen Parksperrenaktuatorik kann eine erhebliche Kosteneinsparung realisiert werden. Durch den Umstand, dass die erste Kupplung für die erste Gangstufe und die zweite Kupplung für die zweite Gangstufe voneinander getrennt sind, können flexible Anpassungen an vom Kunden geforderte Bauräume realisiert werden. Im Vergleich zu Lösungen, bei denen beispielsweise elektrische Maschinen mit Planetengetrieben zusammenwirken oder gar in diese integriert sind, lässt sich ein wesentlich höherer Schaltkomfort beziehungsweise eine erhebliche Verbesserung des Fahrkomforts bei Schaltvorgängen realisieren. Darüber hinaus kann durch den Einsatz des Freilaufs, auf den das erste Kraftübertragungselement in Gestalt des ersten Ritzels aufgenommen ist, die Laufruhe des erfindungsgemäß vorgeschlagenen lastschaltbaren Mehr-Gang-Getriebes erheblich verbessert werden. So dreht sich beispielsweise bei eingelegter erster Gangstufe das zweite Ritzel nicht mit, wodurch sich die Laufruhe, die sich im NVH (Noise Vibration Harshness)-Verhalten niederschlägt, erheblich verbessert. Bei eingelegter zweiter Gangstufe rotieren das erste Kraftübertragungselement in Gestalt des ersten Ritzels sowie das mit diesem kämmende zweite Zahnrad nicht mit, wodurch bei eingelegter zweiter Gangstufe und deaktivierter erster Gangstufe das Noise Vibration Harshness-Verhalten des erfindungsgemäß vorgeschlagenen Mehr-Gang-Getriebes erheblich verbessert wird.

Die auch als "Final Drive" bezeichnete Endgangstufe ist gleichzeitig das Differentialgetriebe. Da das Zahnrad der Endgangstufe das Differentialgetriebe antreibt, können Bauraum, Gewicht und daraus resultierende Kosten eingespart werden.

### Kurze Beschreibung der Zeichnung

Anhand der Zeichnung wird die Erfindung nachstehend eingehender beschrieben.

Es zeigt:
- Figur 1: eine erste Ausführungsvariante eines lastschaltbaren Mehr-Gang-Getriebes, mit einer elektrischen Maschine, einem Differential und von diesem abgehenden Abtriebswellen,
- Figur 2: eine schematische Darstellung des erfindungsgemäß vorgeschlagenen lastschaltbaren Mehr-Gang-Getriebes mit einer Abtriebswelle,
- Figur 3: das lastschaltbare Mehr-Gang-Getriebe gemäß der Darstellung in Figur 2 mit den einzelnen Gangstufen sowie den beiden voneinander getrennten Kupplungen,
- Figur 4: das lastschaltbare Mehr-Gang-Getriebe mit eingezeichnetem Kraftfluss bei eingelegter erster Gangstufe,
- Figur 5: den sich ergebenden Kraftfluss im erfindungsgemäß vorgeschlagenen lastschaltbaren Mehr-Gang-Getriebe bei eingelegter zweiter Gangstufe und
- Figur 6: ein E-Achsen-Modul für ein elektrisches Fahrzeug mit einem lastschaltbaren Mehr-Gang-Getriebe, einer elektrischen Maschine, einem Differential und zwei angetriebenen Rädern.

### Ausführungsvarianten der Erfindung

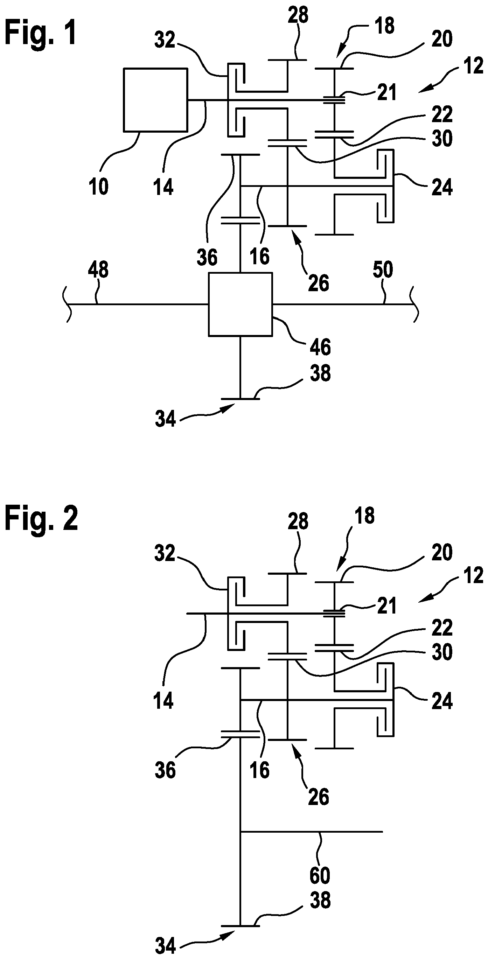

Figur 1 zeigt ein erfindungsgemäß vorgeschlagenes lastschaltbares Mehr-Gang-Getriebe 12, welches über eine elektrische Maschine 10 angetrieben ist. Das lastschaltbare Mehr-Gang-Getriebe 12 umfasst eine angetriebene Eingangswelle 14 sowie eine Welle 16. Die Eingangswelle 14 wird über die elektrische Maschine 10 angetrieben. Am lastschaltbaren Mehr-Gang-Getriebe 12 ist eine erste Gangstufe 18 mit einer ersten Übersetzung i₁ realisiert. Die erste Gangstufe 18 umfasst ein erstes Kraftübertragungselement ausgeführt als erstes Ritzel 20, welches an einem Freilauf 21 auf der Eingangswelle 14 angeordnet ist, sowie ein erstes Zahnrad 22, welches einerseits Teil einer ersten Kupplung 24 ist und andererseits drehbar auf der Welle 16 angeordnet ist. Wie aus der schematischen Darstellung gemäß Figur 1 hervorgeht, durchsetzt die Welle 16 das hier in vorteilhafter Weise hülsenförmig ausgebildete erste Zahnrad 22 der ersten Gangstufe 18.

Des Weiteren umfasst das lastschaltbare Mehr-Gang-Getriebe 12 gemäß der schematischen Darstellung in Figur 1 eine zweite Gangstufe 26. Diese ist gegeben durch ein zweites Ritzel 28, welches Teil einer zweiten Kupplung 32 ist. Dieses kämmt mit einem zweiten Zahnrad 30, welches drehfest auf der Welle 16 angeordnet ist.

Darüber hinaus ist am lastschaltbaren Mehr-Gang-Getriebe 12 eine Endgangstufe 34 vorgesehen. Die Endgangstufe 34, die auch als "Final Drive" bezeichnet wird, ist das Differential 46 und bildet in Kombination mit der ersten Übersetzung i₁ oder der zweiten Übersetzung i₂ den ersten Gang oder den zweiten Gang des lastschaltbaren Mehr-Gang-Getriebes. Das dargestellte 2-Gang-Getriebe könnte auf mehr als die dargestellten zwei Gänge erweitert werden.

Wie aus der Darstellung gemäß Figur 1 des Weiteren hervorgeht, ist auf der Welle 16 des lastschaltbaren Mehr-Gang-Getriebes 12 ein drittes Ritzel 36 drehfest aufgenommen. Dieses kämmt mit einem dritten Zahnrad 38, welches Teil eines Differentials 46 ist.

Vom Differentialgetriebe 46 verlaufen ein erster Achsabtrieb 48 und ein zweiter Achsabtrieb 50 zu in Figur 1 nicht dargestellten angetriebenen Rädern eines elektrisch angetriebenen Fahrzeugs.

Beim erfindungsgemäß vorgeschlagenen lastschaltbaren Mehr-Gang-Getriebe 12 gemäß der Darstellung in Figur 1 sind sämtliche Verzahnungen am ersten Kraftübertragungselement, d. h. am ersten Ritzel 20, an erstem Zahnrad 22, zweitem Ritzel 28, zweitem Zahnrad 30, drittem Ritzel 36 sowie drittem Zahnrad 38 als Stirnverzahnungen ausgeführt. Dadurch kann in vorteilhafter Weise die Schaltbarkeit unter Last günstig beeinflusst werden und die Laufruhe aufgrund der Dämpfung von entstehenden Schwingungen innerhalb des lastschaltbaren Mehr-Gang-Getriebes 12 erheblich verbessert werden. Durch den Freilauf 21 wird andererseits vermieden, dass entsprechend der eingelegten ersten oder zweiten Gangstufe, das Mitlaufen nicht benötigter Komponenten vermieden wird, was das NVH-Verhalten (Noise Vibration Harshness) des erfindungsgemäß vorgeschlagenen lastschaltbaren Mehr-Gang-Getriebes 12 erheblich verbessert.

Bei eingelegter erster Gangstufe 18 dreht sich das zweite Ritzel 28 nicht; bei eingelegter zweiter Gangstufe 26 drehen sich das erste Kraftübertragungselement ausgeführt als erstes Ritzel 20, aufgenommen am Freilauf 21, sowie das erste Zahnrad 22 nicht mit, was die Laufruhe, d. h. das Noise Vibration Harshness-Verhalten des erfindungsgemäß vorgeschlagenen lastschaltbaren Mehr-Gang-Getriebes 12 ebenfalls positiv beeinflusst.

Figur 2 zeigt eine leicht abgewandelte Ausführungsvariante des erfindungsgemäß vorgeschlagenen lastschaltbaren Mehr-Gang-Getriebes 12.

In der Ausführungsvariante gemäß Figur 2 des lastschaltbaren Mehr-Gang-Getriebes 12 sind die erste Gangstufe 18, die zweite Gangstufe 26, sowie die Endgangstufe 34 realisiert. Im Unterschied zur Ausführungsvariante des lastschaltbaren Mehr-Gang-Getriebes 12 gemäß Figur 1 fehlt es in der Ausführungsform gemäß Figur 2 an einem Differential 46, welches Teil des dritten Zahnrads 38 in der Variante gemäß Figur 1 ist. Stattdessen erstreckt sich ausgehend vom dritten Zahnrad 38 der Endgangstufe 34 eine Abtriebswelle 60 zu einer hier nicht weiter dargestellten Antriebskomponente eines Antriebsstrangs.

Die Komponenten der ersten Gangstufe 18, d. h. das erste Kraftübertragungselement, d. h. das erste Ritzel 20, das erste Zahnrad 22 sowie die erste Kupplung 24 sind identisch mit den Komponenten der ersten Gangstufe 18 gemäß Figur 1. Gleiches gilt für die Komponenten der zweiten Gangstufe 26 in der Ausführungsvariante gemäß Figur 2 sowie für die Komponenten der Endgangstufe 34 abgesehen vom Nicht-Vorhandensein eines Differentialgetriebes 46 in der Ausführungsvariante gemäß Figur 2.

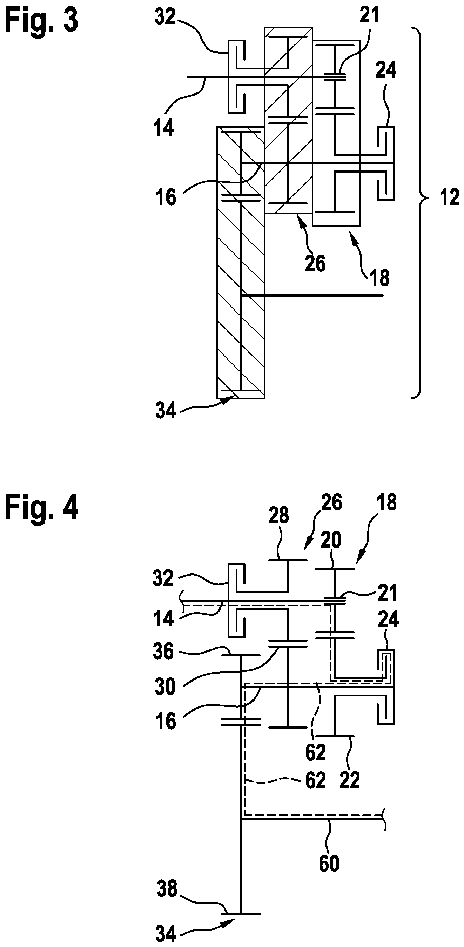

Der Darstellung gemäß Figur 3 sind die einzelnen Gangstufen des lastschaltbaren Mehr-Gang-Getriebes 12 zu entnehmen.

Analog zu den vorstehend beschriebenen Figuren 1 und 2 ist in der Darstellung gemäß Figur 3 wiedergegeben, dass das lastschaltbare Mehr-Gang-Getriebe 12 die erste Gangstufe 18, die zweite Gangstufe 26 sowie die Endgangstufe 34 aufweist. Je nach Betätigung der ersten Kupplung 24, d. h. dem Einlegen der ersten Gangstufe 18 oder der Betätigung der zweiten Kupplung 32 zur Realisierung der zweiten Gangstufe 26 wird die Endgangstufe 34 über die Welle 16 angetrieben. Dies bedeutet, dass in der ersten Gangstufe 18 die erste Übersetzung i₁ realisiert ist, während in der zweiten Gangstufe 26 die zweite Übersetzung i₂ realisiert ist. Abhängig davon, mit welcher Ausgangsdrehzahl die Welle 16 rotiert, liegt in der Endgangstufe 34 eine entsprechende Drehzahl vor. Die Auslegung der ersten Übersetzung i₁ und der zweiten Übersetzung i₂ erfolgt nun derart, dass i₁ > i₂ ist. Daraus ergibt sich, dass das Übersetzungsverhältnis in der dritten Endgangstufe 34 entweder gegeben ist durch i_{ges1} = i₁ · i_{Endgang} bei eingelegter erster Gangstufe 18 oder das Übersetzungsverhältnis i_{ges2} = i₂ · i_{Endgang}, vorliegt, wenn die zweite Gangstufe 26 eingelegt ist.

In der Darstellung gemäß Figur 4 ist der Kraftfluss 62 dargestellt, der sich bei eingelegter erster Gangstufe 18 im erfindungsgemäß vorgeschlagenen lastschaltbaren Mehr-Gang-Getriebe 12 einstellt.

Zur Aktivierung der ersten Gangstufe 18 ist die erste Kupplung 24 geschlossen. Der Kraftfluss 62 läuft ausgehend von der beispielsweise über die elektrische Maschine 10 angetriebene Eingangswelle 14, die offenstehende zweite Kupplung 32 an das erste Kraftübertragungselement, beispielsweise ein erstes Ritzel 20. Dieses ist im Freilauf 21 auf der angetriebenen Eingangswelle 14 aufgenommen. Das erste Kraftübertragungselement ausgeführt als erstes Ritzel 20 treibt gemäß des Kraftverlaufs des Kraftflusses 62 das erste Zahnrad 22 an, welches eine Rotation über die geschlossene erste Kupplung 24 an die Welle 16 überträgt, die ihrerseits das fest auf dieser angeordnete dritte Ritzel 36 der Endgangstufe 34 antreibt. Das dritte Ritzel 36, welches drehfest auf der Welle 16 angeordnet ist, treibt das dritte Zahnrad 38 an, welches wiederum die Abtriebswelle 60 antreibt. Im in Figur 4 dargestellten Schaltzustand des erfindungsgemäß vorgeschlagenen lastschaltbaren Mehr-Gang-Getriebes 12 ist das Übersetzungsverhältnis i_{ges1} = i₁ · i_{Endgang} gegeben. Zur Realisierung des Kraftflusses 62 (vergleiche gestrichelte Darstellung in Figur 4) innerhalb der ersten Gangstufe 18, steht die erste Kupplung 24 geschlossen, wohingegen die zweite Kupplung 32 offen steht. Im in Figur 4 dargestellten Schaltzustand des erfindungsgemäß vorgeschlagenen lastschaltbaren Mehr-Gang-Getriebes 12 rotiert ein Teil der zweiten Kupplung 32 mit, ebenso wie das kein Drehmoment übertragende zweite Zahnrad 30, welches drehfest auf der Welle 16 angetrieben ist, jedoch kein Drehmoment überträgt.

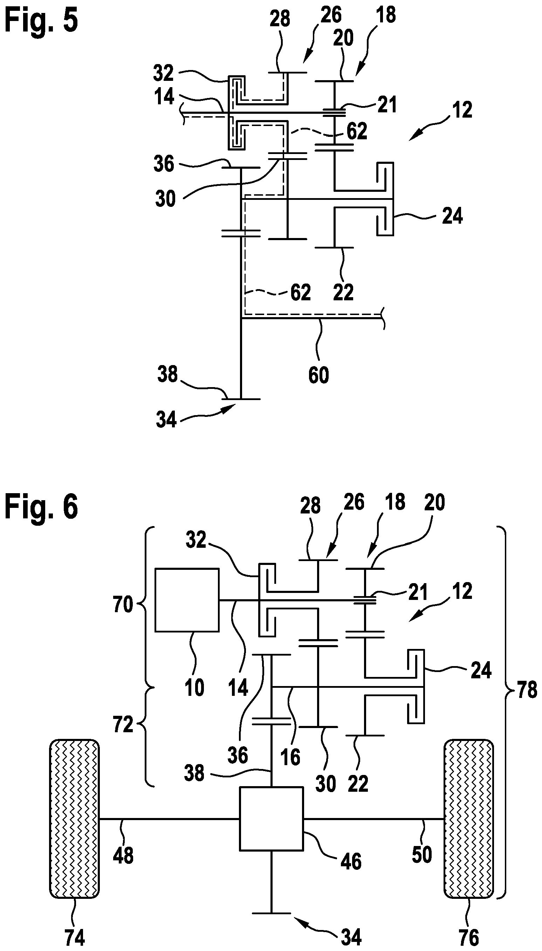

Figur 5 zeigt den sich einstellenden Kraftfluss 62 im erfindungsgemäß vorgeschlagenen lastschaltbaren Mehr-Gang-Getriebe 12 bei eingelegter zweiter Gangstufe 26.

In der Darstellung gemäß Figur 5 steht die erste Kupplung 24 offen, wohingegen die zweite Kupplung 32 geschlossen ist.

Ausgehend von der angetriebenen Eingangswelle 14 wird das Antriebsmoment beispielsweise einer elektrischen Maschine 10, über die geschlossene zweite Kupplung 32 an das zweite Ritzel 28 übertragen. Von dort wird über eine Stirnverzahnung das Drehmoment an das zweite Zahnrad 30 übertragen, welches drehfest auf der Welle 16 angeordnet ist. Über die Welle 16 wird das Drehmoment auf das dritte Ritzel 36 übertragen, welches im Rahmen einer Stirnradverzahnungspaarung mit dem dritten Zahnrad 38 der Endgangstufe 34 kämmt und das Drehmoment an die Abtriebswelle 60 entsprechend des Kraftflusses 62 gemäß Figur 5 überträgt. In dem in Figur 5 dargestellten Schaltzustand liegt das Übersetzungsverhältnis i_{ges2} = i₂ · i_{Endgang} vor. Gemäß Figur 5 wird über das durch den Freilauf 21 auf der angetriebenen Eingangswelle 14 angeordnete erste Kraftübertragungselement kein Drehmoment auf das auf der Welle 16 drehbare erste Zahnrad 22 übertragen, da die erste Kupplung 24 geöffnet steht. Bei eingelegter zweiter Gangstufe 26 stehen das erste Kraftübertragungselement in Gestalt des ersten Ritzels 20 sowie das zweite Zahnrad 30 still. Dadurch wird die Laufruhe des erfindungsgemäß vorgeschlagenen lastschaltbaren Mehr-Gang-Getriebes 12 positiv beeinflusst, da nur die Komponenten rotieren, die zur Drehmomentübertragung erforderlich sind.

Zur Realisierung einer Parksperrenfunktion werden am lastschaltbaren Mehr-Gang-Getriebe 12 beide Kupplungen 24, 32 geschlossen, sodass das lastschaltbare Mehr-Gang-Getriebe 12 blockiert ist und weder die angetriebene Eingangswelle 14 noch die Welle 16 in Rotation versetzt werden kann. Sämtliche mit der blockierten Eingangswelle 14 beziehungsweise der blockierten Welle 16 kämmenden Komponenten sind ebenfalls blockiert, sodass keine Rotation erfolgen kann und eine Parksperrenfunktion ohne Vorsehen weiterer Komponenten im lastschaltbaren Mehr-Gang-Getriebe 12 realisiert werden kann.

Figur 6 zeigt eine schematische Darstellung eines E-Achsen-Moduls, welches an der Hinterachse oder an der Vorderachse eines elektrischen Fahrzeugs Verwendung finden kann.

Aus der Darstellung gemäß Figur 6 geht hervor, dass das dargestellte E-Achsen-Modul 78 das vorstehend beschriebene lastschaltbare Mehr-Gang-Getriebe 12 umfasst sowie eine dieses antreibende elektrische Maschine 10. Das E-Achsen-Modul 78 gemäß Figur 6 weist darüber hinaus das Differentialgetriebe 46 auf, welches Teil einer Endgangstufe 34 ist. Vom Differentialgetriebe 46 aus erstreckt sich ein erster Achsabtrieb 48 zum ersten angetriebenen Rad 74, während sich ein zweiter Achsabtrieb 50 zu einem zweiten angetriebenen Rad 76 erstreckt.

Das dargestellte lastschaltbare Mehr-Gang-Getriebe 12 umfasst zwei Stirnradstufen, nämlich die erste Stirnradstufe 70 sowie die zweite Stirnradstufe 72. Unabhängig von den Stirnradstufen 70, 72 sind beim erfindungsgemäß vorgeschlagenen lastschaltbaren Mehr-Gang-Getriebe 12 zwei Gänge realisiert. Durch die zweite Stirnradstufe 72 kann ein größerer Achsversatz beziehungsweise Achsabstand von einer Motoreingangswelle zu einer Getriebeabtriebswelle realisiert werden. Durch Anpassung des Achsbeugewinkels, welcher durch die Anordnung von Getriebeeingangs-, Zwischen- und Abtriebswelle entsteht, ist der Bauraum, den das erfindungsgemäß vorgeschlagene lastschaltbare Mehr-Gang-Getriebe 12 beansprucht, flexibel anpassbar.

Figur 6 ist zu entnehmen, dass das hier dargestellte lastschaltbare Mehr-Gang-Getriebe 12 als Teil eines E-Achsen-Moduls 78 an der angetriebenen Eingangswelle 14 über die elektrische Maschine 10 angetrieben ist. Der Aufbau des in Figur 6 dargestellten, in das E-Achsen-Modul 78 integrierten lastschaltbaren Mehr-Gang-Getriebes 12 entspricht im Wesentlichen dem Aufbau des lastschaltbaren Mehr-Gang-Getriebes 12 gemäß der Ausführungsvariante, die in Figur 1 dargestellt ist. Das erfindungsgemäß vorgeschlagene lastschaltbare Mehr-Gang-Getriebe 12 umfasst die erste Gangstufe 18, ferner die zweite Gangstufe 26, die entsprechend ihrer ersten Übersetzung i₁ beziehungsweise ihrer zweiten Übersetzung i₂ mit der Endgangstufe 34 zusammenwirken. Je nachdem, welche der beiden Kupplungen 24 und 32 aktiviert ist, ist am lastschaltbaren Mehr-Gang-Getriebe 12 entweder die erste Gangstufe 18 mit der ersten Übersetzung i₁ aktiv oder bei Betätigung der zweiten Kupplung 32 die zweite Gangstufe 26 mit dem zweiten Übersetzungsverhältnis i₂. Je nachdem, ob bei entsprechender Betätigung der beiden Kupplungen 24, 32 die erste Gangstufe 18 oder die zweite Gangstufe 26 eingelegt ist, stellt sich am dritten Ritzel 36 der Endgangstufe 34 eine entsprechende Abtriebsdrehzahl ein. Abhängig von der eingelegten Gangstufe 18, 26 liegt in der Endgangstufe 34 entweder das Übersetzungsverhältnis i_{ges1} = i₁ · i_{Endgang}, vor, falls die erste Gangstufe 18 aktiv ist. Alternativ besteht die Möglichkeit, bei geschlossener zweiter Kupplung 32, den Antrieb über die zweite Gangstufe 26 mit der zweiten Übersetzung i₂ vorzunehmen. In diesem Falle liegt an der Endgangstufe 34 das bereits erwähnte Übersetzungsverhältnis i_{ges2} = i₂ · i_{Endgang} vor.

In der in Figur 6 dargestellten Ausführungsvariante umfasst die Endgangstufe 34 das Differentialgetriebe 46, welches in das dritte Zahnrad 38 integriert ist.

In Abwandlung der Ausführungsvariante des E-Achsen-Moduls 78 gemäß Figur 6 kann anstelle des dort dargestellten lastschaltbaren Mehr-Gang-Getriebes 12, welches die Endgangstufe 34 antreibt, die Endgangstufe 34 so modifiziert werden, dass das Differentialgetriebe 46 entfällt und das dritte Zahnrad 38 die starr mit diesem gekoppelte Abtriebswelle 60 antreibt, wie dies in der Ausführungsvariante gemäß Figur 2 dargestellt ist.

In Bezug auf die vorstehenden Figuren 1 bis 6 ist festzuhalten, dass die erste Kupplung 24 und die zweite Kupplung 32 elektrisch oder hydraulisch betätigbar und voneinander unabhängig schaltbar sind. In vorteilhafter Weise sind in dem erfindungsgemäß vorgeschlagenen lastschaltbaren Mehr-Gang-Getriebe 12 das als erstes Kraftübertragungselement dienende erste Ritzel 20 im Freilauf 21, das zweite Zahnrad 30 sowie das dritte Ritzel 36 jeweils drehfest auf der angetriebenen Eingangswelle 14 beziehungsweise auf der Welle 16 angeordnet. Dem gegenüber sind sowohl das zweite Ritzel 28 als auch das erste Zahnrad 22 hülsenförmig ausgebildet und so ausgelegt, dass ein Teil der erwähnten Komponenten gleichzeitig eine Reibscheibe oder eine Reibkomponente für die erste Kupplung 24 beziehungswiese die zweite Kupplung 32 darstellen. In vorteilhafter Weise sind sowohl die hülsenförmig beschaffenen Komponenten zweites Ritzel 28 und erstes Zahnrad 22 so ausgeführt, dass sich die angetriebene Eingangswelle 14, beziehungsweise die Welle 16 durch diese hülsenförmig ausgeführten Komponenten erstrecken und so die Realisierung der unterschiedlichen Gangstufen erste Gangstufe 18 beziehungswiese zweite Gangstufe 26 mit den diesen eigenen Übersetzungsverhältnissen i₁, i₂ ermöglichen.

## Patentansprüche

1. Lastschaltbares Mehr-Gang-Getriebe (12) mit einer angetriebenen Eingangswelle (14) und einer Welle (16) mit einer ersten Gangstufe (18) und mit einer zweiten Gangstufe (26), wobei die erste Gangstufe (18) mit einer ersten Übersetzung i₁ mit einem als erstes Kraftübertragungselement vorgesehenen ersten Ritzel (20) mit Stirnradverzahnung, das mittels eines Freilaufs (21) auf der Eingangswelle (14) angeordnet ist, und einem ersten Zahnrad (22) mit Stirnradverzahnung versehen ist, wobei die zweite Gangstufe (26) mit einer zweiten Übersetzung i₂ ein zweites Ritzel (28) mit Stirnradverzahnung und ein zweites Zahnrad (30) mit Stirnradverzahnung aufweist, wobei der ersten Gangstufe (18) eine erste Kupplung (24) und der zweiten Gangstufe (26) eine von der ersten Kupplung (24) getrennt angebrachte zweite Kupplung (32) zugeordnet ist, wobei das zweite Ritzel (28) in Hülsenform ausgeführt, auf der Eingangswelle (14) gelagert und Teil der zweiten Kupplung (32) ist und wobei das erste Zahnrad (22) auf der Welle (16) gelagert ist, **dadurch gekennzeichnet, dass** das erste Zahnrad (22) in Hülsenform ausgeführt und auf der Welle (16) drehbar gelagert ist und Teil der ersten Kupplung (24) ist.

2. Lastschaltbares Mehr-Gang-Getriebe (12) gemäß Anspruch 1, **dadurch gekennzeichnet, dass** dieses durch mindestens eine elektrische Maschine (10) angetrieben ist.

3. Lastschaltbares Mehr-Gang-Getriebe (12) gemäß Anspruch 1, **dadurch gekennzeichnet, dass** das lastschaltbare Mehr-Gang-Getriebe (12) eine Endgangstufe (34) aufweist.

4. Lastschaltbares Mehr-Gang-Getriebe (12) gemäß Anspruch 3, **dadurch gekennzeichnet, dass** die Endgangstufe (34) als Stirnradverzahnung mit einem drehfest auf der Welle (16) angeordneten dritten Ritzel (36) und einem dritten Zahnrad (38) ausgelegt ist.

5. Lastschaltbares Mehr-Gang-Getriebe (12) gemäß einem der vorstehenden Ansprüche, **dadurch gekennzeichnet, dass** das zweite Zahnrad (30) drehfest auf der Welle (16) angeordnet ist.

6. E-Achsen-Modul (78) als Vorder- und/oder Hinterachse eines elektrisch oder hybrid angetriebenen Fahrzeugs mit einem lastschaltbaren Mehr-Gang-Getriebe (12) gemäß einem der Ansprüche 1 bis 5 und mit mindestens einer elektrischen Maschine (10).

7. Verwendung des lastschaltbaren Mehr-Gang-Getriebes (12) gemäß einem der Ansprüche 1 bis 5 in einem E-Achsen-Modul (78) eines elektrisch oder hybrid angetriebenen Fahrzeugs.

## Claims

1. Power-shiftable multi-gear transmission (12) having a driven input shaft (14) and a shaft (16) having a first gear stage (18) and having a second gear stage (26), wherein the first gear stage (18) having a first transmission ratio i₁ is provided with a first pinion (20) with spur gearing as a first power transmission element, which is arranged on the input shaft (14) by means of a freewheel (21), and a first gear wheel (22) with spur gearing, wherein a second gear stage (26) having a second transmission ratio i₂ has a second pinion (28) with spur gearing and a second gear wheel (30) with spur gearing, wherein the first gear stage (18) is assigned a first clutch (24) and the second year stage (26) is assigned a second clutch (32), fitted separately from the first clutch (24), wherein the second pinion (28), designed in the form of a sleeve, is mounted on the input shaft (14) and is part of the second clutch (32), and wherein the first gear wheel (22) is mounted on the shaft (16), **characterized in that** the first gear wheel (22) is designed in the form of a sleeve and is rotatably mounted on the shaft (16) and is part of the first clutch (24).

2. Power-switchable multi-gear transmission (12) according to Claim 1, **characterized in that** this is driven by at least one electric machine (10).

3. Power-switchable multi-gear transmission (12) according to Claim 1, **characterized in that** the power-shiftable multi-gear transmission (12) has a final gear stage (34).

4. Power-switchable multi-gear transmission (12) according to Claim 3, **characterized in that** the final gear stage (34) is designed as spur gearing with a third pinion (36) co-rotationally arranged on the shaft (16) and a third gear wheel (38).

5. Power-switchable multi-gear transmission (12) according to one of the preceding claims, **characterized in that** the second gear wheel (30) is co-rotationally arranged on the shaft (16).

6. Electric-axle module (78) as a front and/or rear axle of an electrically or hybrid driven vehicle having a power-switchable multi-gang transmission (12) according to one of Claims 1 to 5 and having at least one electric machine (10).

7. Use of the power-switchable multi-gang transmission (12) according to one of Claims 1 to 5 in an electric-axle module (78) of an electrically or hybrid driven vehicle.

## Revendications

1. Transmission à plusieurs rapports (12) à changement de vitesses sous charge comprenant un arbre d'entrée mené (14) et un arbre (16) doté d'un premier étage de transmission (18) et doté d'un deuxième étage de transmission (26), le premier étage de transmission (18) présentant un premier rapport de transmission i₁ étant pourvu d'un premier pignon (20), prévu en tant que premier élément de transmission de force, doté d'une denture droite, lequel pignon est disposé sur l'arbre d'entrée (14) au moyen d'une roue libre (21), et d'une première roue dentée (22) dotée d'une denture droite, le deuxième étage de transmission (26) doté d'un deuxième rapport de transmission i₂ présentant un deuxième pignon (28) doté d'une denture droite et une deuxième roue dentée (30) dotée d'une denture droite, un premier embrayage (24) étant associé au premier rapport de transmission (18) et un deuxième embrayage (32) installé séparément du premier embrayage (24) étant associé au deuxième étage de transmission (26), le deuxième pignon (28) étant réalisé sous forme de douille, étant monté sur l'arbre d'entrée (14) et faisant partie du deuxième embrayage (32) et la première roue dentée (22) étant montée sur l'arbre (16), **caractérisée en ce que** la première roue dentée (22) est réalisée sous forme de douille et est montée à rotation sur l'arbre (16) et fait partie du premier embrayage (24).

2. Transmission à plusieurs rapports (12) à changement de vitesses sous charge selon la revendication 1, **caractérisée en ce que** celle-ci est entraînée par au moins une machine électrique (10).

3. Transmission à plusieurs rapports (12) à changement de vitesses sous charge selon la revendication 1, **caractérisée en ce que** la transmission à plusieurs rapports (12) à changement de vitesse sous charge présente un étage de transmission final (34).

4. Transmission à plusieurs rapports (12) à changement de vitesses sous charge selon la revendication 3, **caractérisée en ce que** l'étage de transmission final (34) est conçu sous forme d'engrenage droit doté d'un troisième pignon (36) disposé de manière solidaire en rotation sur l'arbre (16) et d'une troisième roue dentée (38) .

5. Transmission à plusieurs rapports (12) à changement de vitesses sous charge selon l'une des revendications précédentes, **caractérisée en ce que** la deuxième roue dentée (30) est disposée de manière solidaire en rotation sur l'arbre (16).

6. Module d'essieu électrique (78) en tant qu'essieu avant et/ou arrière d'un véhicule à propulsion électrique ou hybride comprenant une transmission à plusieurs rapports (12) à changement de vitesses sous charge selon l'une des revendications 1 à 5 et comprenant au moins une machine électrique (10).

7. Utilisation de la transmission à plusieurs rapports (12) à changement de vitesses sous charge selon l'une des revendications 1 à 5 dans un module d'essieu électrique (78) d'un véhicule à propulsion électrique ou hybride.
